# EUROPÄISCHE PATENTANMELDUNG

(11) **EP 4 531 146 A2**
(43) Veröffentlichungstag der Anmeldung: **02.04.2025**
(21) Anmeldenummer: 24168357.2
(22) Anmeldetag: 05.02.2021
(51) Int. Cl.: H01M 8/04044

(54) **IONENTAUSCHERFILTERVORRICHTUNG UND IONENTAUSCHERKARTUSCHE**

(30) Priorität: 24.02.2020 DE 102020104720
(62) Teilanmeldung aus: 21705441.0
(71) Anmelder: MANN+HUMMEL GmbH, 71636 Ludwigsburg (DE)
(72) Erfinder: WILDERMUTH, Andreas, 71672 Marbach (DE); PFLÜGER, Frank, 74343 Sachsenheim (DE); ROLLE, Arndt-Udo, 70192 Stuttgart (DE); LEININGER, Simon, 70439 Stuttgart (DE)
(74) Vertreter: Mann + Hummel Intellectual Property

(57) **Zusammenfassung**

Die Erfindung beschreibt eine Ionentauscherfiltervorrichtung für ein Brennstoffzellensystem, die eine lonentauscherkartusche in einem Gehäuse enthält. Die Kartusche hat einen Behälter mit lonentauschermaterial und Ausströmfenster an der Wandung. Die Ausströmfenster sind axial versetzt zur Ausströmöffnung des Gehäuses, so dass der Strömungsweg eine Umlenkung um mindestens 45 Grad macht. Die Erfindung betrifft auch eine lonentauscherkartusche und ein Brennstoffzellensystem mit der Filtervorrichtung.

## Beschreibung

### Technisches Gebiet

Die Erfindung betrifft eine lonentauscherfiltervorrichtung, insbesondere für ein Brennstoffzellensystem, mit einem Gehäuse, in dem eine lonentauscherkartusche aufgenommen ist sowie eine lonentauscherkartusche für eine lonentauscherfiltervorrichtung.

### Stand der Technik

Brennstoffzellen haben einen elektrischen Wirkungsgrad von ungefähr 50%. Der Rest der Energie fällt als Wärme an. Diese muss abgeführt werden, um den Wirkungsgrad der Brennstoffzelle so hoch wie möglich zu halten. Dafür umspült ein Kühlmedium die Zellen. Bei einer elektrischen Leitfähigkeit des Kühlmediums kann es zu einem Kurzschluss zwischen den Zellen kommen. Deshalb ist eine Deionisierung über einen Ionentauseher notwendig. Da die Kühlflüssigkeit auch weitere Eigenschaften wie Frostschutz erfüllen muss, kommen hier Mischungen zum Einsatz, z.B. deionisiertes Wasser und Monoethylenglykol in einem Verhältnis von 50:50.

DE102009012379A1 offenbart eine lonentauscherkartusche für ein Kühlmittelsystem eines Brennstoffzellenstapels und ein Gehäuse, das derart angepasst ist, um ein lonentauscherharz darin zu enthalten. Das Gehäuse besitzt einen Einlass und zumindest ein mediumpermeables Auslassfenster, das für einen Durchfluss von Kühlmittel konfiguriert ist. Die lonentauscherkartusche ist derart angepasst, dass sie in dem Kühlmittelsystem entfernbar angeordnet ist. DE102009012379A1 offenbart dazu weiter eine lonentauscherkartuschenanordnung, welche die lonentauscherkartusche umfasst. Die lonentauscherkartuschenanordnung umfasst eine Halterung, die mit der lonentauscherkartusche gekoppelt ist. Die Halterung ist zur Entfernung der lonentauscherkartusche von dem Kühlmittelsystem angepasst.

WO 2011/018508 A1 offenbart ebenfalls eine lonentauscherfiltervorrichtung, insbesondere für ein Brennstoffzellensystem, mit einem Gehäuse, in dem eine lonentauscherkartusche aufgenommen ist.

### Offenbarung der Erfindung

Eine Aufgabe der Erfindung ist es, eine bauraumgünstige, wartungsfreundliche lonentauscherfiltervorrichtung mit einer verbesserten Entlüftungsmöglichkeit anzugeben.

Eine weitere Aufgabe ist es, eine lonentauscherkartusche für eine bauraumgünstige, wartungsfreundliche lonentauscherfiltervorrichtung mit einer verbesserten Entlüftungsmöglichkeit anzugeben.

Die vorgenannte Aufgabe wird nach einem Aspekt der Erfindung gelöst von einer lonentauscherfiltervorrichtung, insbesondere für ein Brennstoffzellensystem, mit einem Gehäuse, in dem eine lonentauscherkartusche aufgenommen ist, wobei das Gehäuse zumindest eine Einströmöffnung und zumindest eine Ausströmöffnung für ein Medium aufweist, wobei die zumindest eine Einströmöffnung und die zumindest eine Ausströmöffnung eine Wandung des Gehäuses durchbrechen, wobei ein Strömungsweg von der Einströmöffnung durch die lonentauscherkartusche zur Ausströmöffnung verläuft, wobei die lonentauscherkartusche einen Kartuschenbehälter mit einem Aufnahmeraum aufweist, der mit lonentauschermaterial gefüllt und durch eine umlaufende Wandung begrenzt ist, die am oder über ihren Umfang verteilt ein oder mehrere Ausströmfenster aufweist, dadurch gekennzeichnet, dass das oder die Ausströmfenster der lonentauscherkartusche bezüglich der Ausströmöffnung des Gehäuses in axialer Richtung versetzt angeordnet sind, wobei der Strömungsweg stromabwärts der Ausströmfenster der Ionentauscherkartusche wenigstens eine Umlenkung, insbesondere um mindestens 45 Grad aufweist, bevorzugt um 90 Grad.

Die weitere Aufgabe wird nach einem weiteren Aspekt der Erfindung gelöst von einer lonentauscherkartusche für eine lonentauscherfiltervorrichtung nach einem der vorhergehenden Ansprüche, mit einem Kartuschenbehälter, der einen Aufnahmeraum aufweist, der mit lonentauschermaterial gefüllt und durch eine umlaufende Wandung begrenzt ist, die am oder über ihren Umfang verteilt ein oder mehrere Ausströmfenster aufweist, dadurch gekennzeichnet, dass die Wandung einteilig mit oder form- oder stoffschlüssig mit einem Deckel verbunden ausgebildet ist, der bestimmungsgemäß als Deckel eines Gehäuses der lonentauscherfiltervorrichtung zur Aufnahme der lonentauscherkartusche vorgesehen ist.

Günstige Ausgestaltungen und Vorteile der Erfindung ergeben sich aus den weiteren Ansprüchen, der Beschreibung und der Zeichnung.

Es wird eine lonentauscherfiltervorrichtung vorgeschlagen, insbesondere für ein Brennstoffzellensystem, mit einem Gehäuse, in dem eine lonentauscherkartusche aufgenommen ist, wobei das Gehäuse zumindest eine Einströmöffnung und zumindest eine Ausströmöffnung für ein Medium aufweist, und wobei die zumindest eine Einströmöffnung und die zumindest eine Ausströmöffnung eine Wandung des Gehäuses durchbrechen. Ein Strömungsweg verläuft von der Einströmöffnung durch die lonentauscherkartusche zur Ausströmöffnung. Die lonentauscherkartusche weist einen Kartuschenbehälter mit einem Aufnahmeraum auf, der mit lonentauschermaterial gefüllt und durch eine umlaufende Wandung begrenzt ist, die am oder über ihren Umfang verteilt ein oder mehrere Ausströmfenster aufweist.

Erfindungsgemäß sind das oder die Ausströmfenster der lonentauscherkartusche bezüglich der Ausströmöffnung des Gehäuses in axialer Richtung versetzt angeordnet, wobei der Strömungsweg stromabwärts der Ausströmfenster der lonentauscherkartusche wenigstens eine Umlenkung, insbesondere um mindestens 45 Grad aufweist, bevorzugt um 90 Grad. Die Strömung verlässt die Ausströmfenster im Wesentlichen in Radialrichtung um anschließend die Umlenkung zu erfahren.

Gemäß einer bevorzugten Weiterbildung kann die Ausströmöffnung eine Mantelwandung des Gehäuses durchbrechen. In einer weiteren Ausführungsvariante kann auch die Einströmöffnung eine Mantelwandung des Gehäuses durchbrechen, wobei die Einströmöffnung alternativ aber auch in einer Stirnwandung vorgesehen sein kann.

Durch die Umlenkung verläuft der Strömungsweg stromabwärts der Ausströmfenster abschnittsweise entgegen einem Strömungsweg innerhalb des Kartuschenkörpers.

Günstigerweise kann die lonentauscherfiltervorrichtung zur Deionisierung von Wasser eingesetzt werden, beispielsweise für Brennkraftmaschinen mit Wassereinspritzung, Brennstoffzellensysteme und dergleichen.

Eine Verbesserung des Herstellungsprozesses der lonentauscherkartusche kann vorteilhaft durch einen Kartuschenbehälter mit umspritztem Siebgewebe erzielt werden, wobei das Siebgewebe sowohl die Einströmöffnung als auch die zumindest eine Ausströmöffnung der lonentauscherkartusche abdecken kann. Vorteil dieses Designs ist, dass nur bei einem Bauteil eine Umspritzung erforderlich ist. Dabei kann die Einströmöffnung idealerweise senkrecht zur axialen Richtung, beispielsweise im Boden der lonentauscherkartusche und die zumindest eine Ausströmöffnung bezüglich der axialen Richtung der lonentauscherkartusche radial orientiert sein in der Wandung der lonentauscherkartusche. Das Verschließen des mit dem lonentauschermaterial, wie beispielsweise lonentauscherharz, befüllten Kartuschenbehälters kann direkt mit dem Deckel des Gehäuses der lonentauscherfiltervorrichtung erfolgen, so dass diese Baugruppe um ein Bauteil reduziert werden kann.

Dieser Deckel stellt sicher, dass das lonentauschermaterial in der lonentauscherkartusche verbleibt und kann im Betrieb auch das Gehäuse gegen die Umgebung abdichten.

Der Bauraum kann bei der erfindungsgemäßen lonentauscherfiltervorrichtung günstig ausgenutzt werden, da auch oberhalb der Ausströmöffnung der lonentauscherfiltervorrichtung lonentauschermaterial angeordnet werden kann, wenn die lonentauscherkartusche sich in axialer Richtung über die Ausströmöffnung hinaus erstreckt. Das Kühlmedium kann dann bis an die Innenseite des Deckels strömen, wo es umgelenkt wird und über einen Ringspalt zwischen Kartuschenbehälter und Deckel der lonentauscherfiltervorrichtung entgegen der bisherigen Strömungsrichtung zurück zur Ausströmöffnung geführt werden kann.

Die Umlenkung der Strömung beim Eintritt in den Ringspalt kann dabei homogenisierend auf die Strömung wirken, so dass das gesamte lonentauschermaterial gleichmäßig aufgebraucht wird und sich bzgl. der Strömung keine Toträume bilden.

Eine bezüglich der Schwererichtung weit oben am Gehäuse der lonentauscherfiltervorrichtung liegende Anordnung der Ausströmöffnung kann wiederum gewährleisten, dass die lonentauscherfilteranordnung ausreichend gut entlüftet werden kann.

Des Weiteren gewährleistet die erfindungsgemäße lonentauscherfiltervorrichtung, dass alle servicerelevanten Teile in einem Arbeitsgang ausgetauscht werden können. Das umfasst insbesondere lonentauschermaterial und Dichtungen zwischen lonentauscherkartusche und Gehäuse der lonentauscherfiltervorrichtung.

Nach einer günstigen Ausgestaltung der lonentauscherfiltervorrichtung können die Ausströmfenster der lonentauscherkartusche bezüglich einer Schwererichtung in einer bestimmungsgemäßen Montageposition axial oberhalb der Ausströmöffnung des Gehäuses angeordnet sein. Dadurch kann der Bauraum bei der erfindungsgemäßen Ionentauscherfiltervorrichtung besonders günstig ausgenutzt werden, da auch oberhalb der Ausströmöffnung der lonentauscherfiltervorrichtung lonentauschermaterial angeordnet werden kann. Das Kühlmedium strömt dann bis an die Innenseite des Deckels, wo es umgelenkt wird und über einen Ringspalt zwischen Kartuschenbehälter und Deckel der lonentauscherfiltervorrichtung entgegen der bisherigen Strömungsrichtung zurück zur Ausströmöffnung geführt wird.

Nach einer günstigen Ausgestaltung der lonentauscherfiltervorrichtung kann die Ausströmöffnung in einem oberen Drittel einer Gehäusehöhe des Gehäuses angeordnet sein. Auf diese Weise kann bei der Anordnung des Ausströmfensters der lonentauscherkartusche oberhalb der Ausströmöffnung des Gehäuses eine günstige Strömungsverteilung, sowie ein günstiger Strömungswiderstand der lonentauscherfiltervorrichtung erreicht werden.

Nach einer günstigen Ausgestaltung der lonentauscherfiltervorrichtung können die Ausströmfenster der lonentauscherkartusche in einem axial oberen Viertel des Aufnahmeraums angeordnet sein. Bei dieser Anordnung der Ausströmfenster ist es möglich, das lonentauschermaterial in der lonentauscherkartusche besonders günstig auszunutzen, bevor es bei einem Wartungsprozess zu ersetzen ist.

Nach einer günstigen Ausgestaltung der lonentauscherfiltervorrichtung kann Siebgewebe vor den Ausströmfenstern der lonentauscherkartusche angeordnet sein. Das Siebgewebe ermöglicht eine günstigen strömungswiderstandsarmen Durchtritt der Mediumströmung und hält gleichzeitig das lonentauschermaterial in der lonentauscherkartusche zurück. Die Ausströmfenster des Kartuschenbehälters können damit in einer günstigen Größe dimensioniert werden.

Nach einer günstigen Ausgestaltung der lonentauscherfiltervorrichtung kann das Gehäuse einen Einströmstutzen aufweisen, welcher bevorzugt in einem unteren Drittel einer Gehäusehöhe des Gehäuses angeordnet ist. Die Mediumströmung kann so günstig am Boden der lonentauscherkartusche durch ein Einströmfenster in den Kartuschenbehälter geleitet werden. Der Strömungswiderstand kann durch die niedrige Anordnung des Einströmstutzens niedrig gehalten werden.

Nach einer günstigen Ausgestaltung der lonentauscherfiltervorrichtung kann die lonentauscherkartusche zumindest eine umlaufende Dichtung, insbesondere eine umlaufende, im Wesentlichen in radialer Richtung dichtende Dichtung, aufweisen, welche insbesondere an einem den Ausströmfenstern abgewandten axialen Endbereich angeordnet ist. Mit einer solchen umlaufenden radial wirkenden Dichtung kann die lonentauscherkartusche am unteren Ende bei der bestimmungsgemäßen Montage im Gehäuse der lonentauscherfiltervorrichtung wirksam abgedichtet werden, so dass eine Trennung zwischen ungefiltertem und gefiltertem Medium gewährleistet ist. Die Dichtung ist bevorzugt am Deckel gehalten, insbesondere in einer an einen Gewindeabschnitt angrenzenden Dichtungsnut.

Nach einer günstigen Ausgestaltung der lonentauscherfiltervorrichtung kann das lonentauschermaterial als Schüttung vorliegen. Die Schüttung, beispielsweise in Form von Ionentauscherharzpartikeln, weist eine große Oberfläche auf, so dass die Wirksamkeit und effektive Ausnutzung des lonentauschermaterials gegeben ist und eine lange Standzeit der lonentauscherkartusche erreicht werden kann.

Nach einer günstigen Ausgestaltung der lonentauscherfiltervorrichtung kann ein Deckel des Gehäuses einteilig mit der lonentauscherkartusche ausgebildet sein oder form- bzw. stoffschlüssig mit dem Kartuschenbehälter verbunden sein. Auf diese Weise kann die lonentauscherkartusche kostengünstig hergestellt werden. Außerdem kann eine wirksame Abdichtung des Innenraums der lonentauscherfiltervorrichtung gegen die Umgebung dargestellt werden. Damit ist die Trennung zwischen gefiltertem und ungefiltertem Medium auf effektive Art möglich.

Nach einer günstigen Ausgestaltung der lonentauscherfiltervorrichtung kann der Deckel einen Übergriffsbereich, insbesondere einen Verbindungsabschnitt, insbesondere einen Gewindeabschnitt, aufweisen, welcher in axialer Richtung die Ausströmfenster überlappt. Die lonentauscherkartusche kann mit dem Übergriffsbereich leicht in das Gehäuse eingesetzt und damit verbunden werden. Insbesondere kann der Übergriffsbereich hierzu einen Gewindeabschnitt aufweisen, welcher mit einem am Gehäuse der lonentauscherfiltervorrichtung angeordneten Gegengewinde zusammenwirkt. Durch die Überlappung kann das Ausströmfenster am oberen Ende des Aufnahmeraums des Kartuschenbehälters angeordnet werden, so dass eine effektive Ausnutzung des lonentauschermaterials gegeben ist. Das gefilterte Medium kann durch das Ausströmfenster in einem Spalt zwischen Übergriffsbereich und Wandung des Kartuschenbehälters zur Ausströmöffnung des Gehäuses geleitet werden.

Nach einem weiteren Aspekt der Erfindung wird eine lonentauscherkartusche für eine lonentauscherfiltervorrichtung vorgeschlagen, mit einem Kartuschenbehälter, der einen Aufnahmeraum aufweist, der mit lonentauschermaterial gefüllt und durch eine umlaufende Wandung begrenzt ist, die am oder über ihren Umfang verteilt ein oder mehrere Ausströmfenster aufweist.

Erfindungsgemäß ist die Wandung einteilig mit einem Deckel ausgebildet oder form- bzw. stoffschlüssig mit dem Kartuschenbehälter verbunden, wobei der Deckel bestimmungsgemäß als Deckel eines Gehäuses der lonentauscherfiltervorrichtung zur Aufnahme der lonentauscherkartusche vorgesehen ist.

Eine Verbesserung des Herstellungsprozesses der lonentauscherkartusche kann vorteilhaft durch einen Kartuschenbehälter mit umspritztem Siebgewebe erzielt werden, wobei das Siebgewebe sowohl die Einströmöffnung als auch die zumindest eine Ausströmöffnung der lonentauscherkartusche abdeckt. Vorteil dieses Designs ist, dass nur bei einem Bauteil eine Umspritzung erforderlich ist. Dabei ist die Einströmöffnung idealerweise senkrecht und die zumindest eine Ausströmöffnung ist bezüglich einer axialen Richtung der lonentauscherkartusche radial orientiert.

Das Verschließen des mit dem lonentauschermaterial wie beispielsweise lonentauscherharz befüllten Kartuschenbehälters kann direkt mit dem Deckel des Gehäuses der lonentauscherfiltervorrichtung erfolgen, so dass diese Baugruppe um ein Bauteil reduziert werden kann.

Auf diese Weise kann die lonentauscherkartusche kostengünstig hergestellt werden. Außerdem kann eine wirksame Abdichtung des Innenraums der lonentauscherfiltervorrichtung gegen die Umgebung dargestellt werden. Damit ist die Trennung zwischen gefiltertem und ungefiltertem Medium auf effektive Art möglich.

Nach einer günstigen Ausgestaltung der lonentauscherkartusche kann der Deckel einen Übergriffsbereich, insbesondere einen Verbindungsabschnitt, insbesondere einen Gewindeabschnitt, aufweisen, welcher in axialer Richtung die Wandung wenigstens überlappt. Die lonentauscherkartusche kann mit dem Übergriffsbereich leicht in das Gehäuse eingesetzt und mit diesem verbunden werden. Insbesondere kann der Übergriffsbereich einen Gewindeabschnitt aufweisen, welcher mit einem am Gehäuse der lonentauscherfiltervorrichtung angeordneten Gegengewinde zusammenwirkt. Durch die Überlappung kann das Ausströmfenster am oberen Ende des Aufnahmeraums des Kartuschenbehälters angeordnet werden, so dass eine effektive Ausnutzung des lonentauschermaterials gegeben ist. Das gefilterte Medium kann durch das Ausströmfenster in einem Spalt zwischen Übergriffsbereich und Wandung des Kartuschenbehälters zur Ausströmöffnung des Gehäuses geleitet werden.

Es ist zwischen dem Übergriffsbereich und der Wandung ein Spalt, insbesondere ein Ringspalt, ausgebildet. Der Bauraum kann bei der erfindungsgemäßen lonentauscherfiltervorrichtung günstig ausgenutzt werden, da auch oberhalb der Ausströmöffnung der lonentauscherfiltervorrichtung lonentauschermaterial angeordnet werden kann. Das Kühlmedium strömt dann bis an die Innenseite des Deckels, wo es umgelenkt wird und über den Ringspalt zwischen Kartuschenbehälter und Deckel der lonentauscherfiltervorrichtung entgegen der bisherigen Strömungsrichtung zurück zur Ausströmöffnung geführt wird. Der Ringspalt wirkt dabei homogenisierend auf die Strömung, so dass das gesamte lonentauschermaterial gleichmäßig aufgebraucht wird und sich bzgl. der Strömung keine Toträume bilden.

Nach einer günstigen Ausgestaltung der lonentauscherkartusche können das oder die Ausströmfenster in einem vom Übergriffsbereich überlappten Bereich der Wandung angeordnet sein. Durch die Überlappung kann das Ausströmfenster am oberen Ende des Aufnahmeraums des Kartuschenbehälters angeordnet werden, so dass eine effektive Ausnutzung des lonentauschermaterials gegeben ist. Das gefilterte Medium kann durch das Ausströmfenster in einem Spalt zwischen Übergriffsbereich und Wandung des Kartuschenbehälters zur Ausströmöffnung des Gehäuses geleitet werden.

Ferner weist ein Strömungsweg eines Mediums durch die lonentauscherkartusche stromabwärts der Ausströmfenster wenigstens eine Umlenkung innerhalb des Spalts auf. Die Umlenkung der Strömung beim Eintritt in den Ringspalt wirkt dabei homogenisierend auf die Strömung, so dass das gesamte lonentauschermaterial gleichmäßig aufgebraucht wird und sich bzgl. der Strömung keine Toträume bilden.

Nach einem weiteren Aspekt der Erfindung wird ein Brennstoffzellensystem mit einer erfindungsgemäßen lonentauscherfiltervorrichtung vorgeschlagen. Vorteilhaft ergibt sich durch Integration der lonentauscherfiltervorrichtung in das Brennstoffzellensystem eine kompakte Anlage, welche kostengünstig und wartungsfreundlich zu betreiben ist.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: eine lonentauscherfiltervorrichtung nach einem Ausführungsbeispiel der Erfindung in isometrischer Ansicht;
- Fig. 2: eine Draufsicht in die längsgeschnittene lonentauscherfiltervorrichtung nach Figur 1;
- Fig. 3: eine lonentauscherkartusche für eine lonentauscherfiltervorrichtung nach einem Ausführungsbeispiel der Erfindung;
- Fig. 4: die lonentauscherkartusche nach Figur 3 mit teilweise angeschnittenem Übergriffsbereich.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

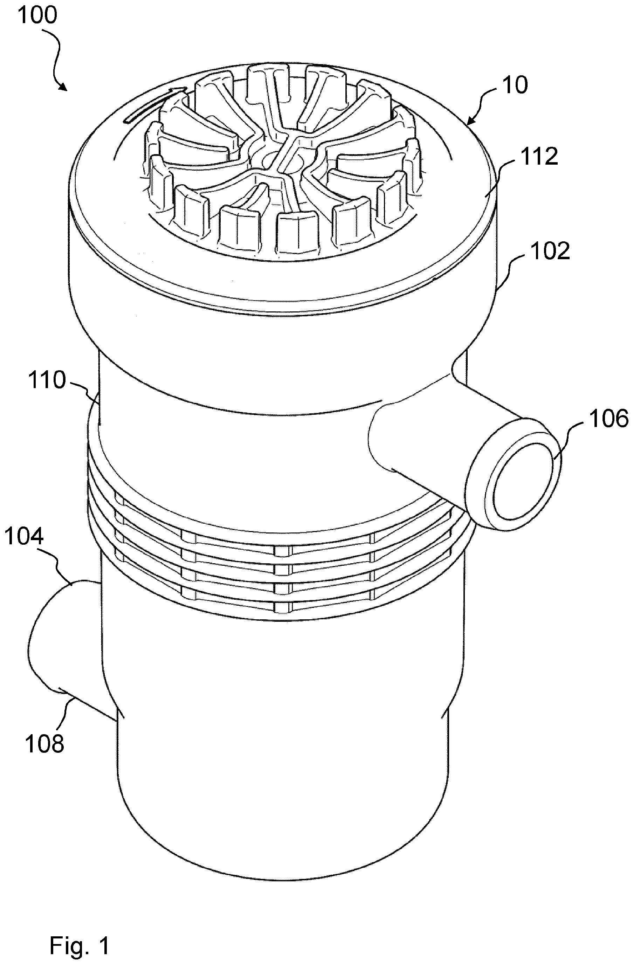

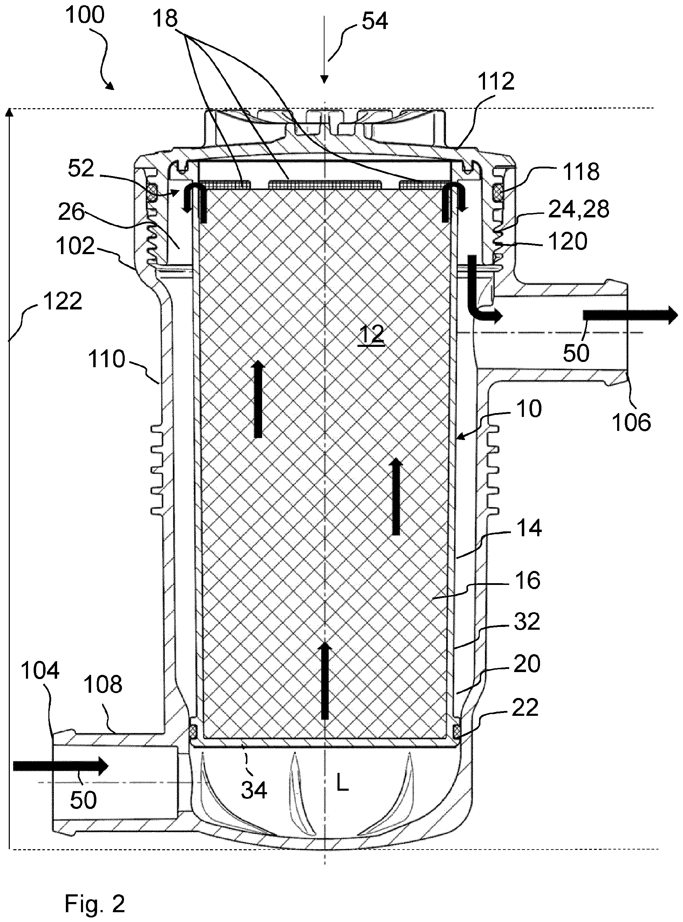

Figuren 1 und 2 zeigen eine lonentauscherfiltervorrichtung 100 nach einem Ausführungsbeispiel der Erfindung, welche insbesondere für ein Brennstoffzellensystem vorgesehen ist. Die lonentauscherfiltervorrichtung 100 ist in Figur 1 in isometrischer Ansicht und in Figur 2 in einem Längsschnitt dargestellt.

Die lonentauscherfiltervorrichtung 100 weist ein Gehäuse 102 auf, in dem eine Ionentauscherkartusche 10 aufgenommen ist. Das Gehäuse 102 weist zumindest eine Einströmöffnung 104 und zumindest eine Ausströmöffnung 106 für ein Medium, beispielsweise ein Kühlmedium, auf, wobei die zumindest eine Einströmöffnung 104 und die zumindest eine Ausströmöffnung 106 eine Mantelwandung 110 des Gehäuses 102 durchbrechen.

Das Gehäuse 102 weist einen Einströmstutzen 108 mit der Einströmöffnung 104 auf, welcher bevorzugt in einem unteren Drittel einer Gehäusehöhe 122 des Gehäuses 102 angeordnet ist, wobei die Ausströmöffnung 106 in einem oberen Drittel einer Gehäusehöhe 122 des Gehäuses 102 angeordnet ist.

Ein Strömungsweg 50 verläuft von der Einströmöffnung 104 des Einströmstutzens 108 durch die lonentauscherkartusche 10 zur Ausströmöffnung 106.

Die lonentauscherkartusche 10 weist einen Kartuschenbehälter 14 mit einem Aufnahmeraum 16 auf, der mit lonentauschermaterial 12 gefüllt und durch eine umlaufende Wandung 32 begrenzt ist, die über ihren Umfang verteilt mehrere Ausströmfenster 18 aufweist. Die Ausströmfenster 18 der lonentauscherkartusche 10 sind bezüglich der Ausströmöffnung 106 des Gehäuses 102 in axialer Richtung L versetzt angeordnet. Die Ausströmfenster 18 sind bezüglich einer Schwererichtung 54 in der dargestellten bestimmungsgemäßen Montageposition axial oberhalb der Ausströmöffnung 106 des Gehäuses 102 angeordnet.

Das lonentauschermaterial 12 im Aufnahmeraum 16 ist als Schüttung vorgesehen und kann beispielsweise ein lonentauscherharz in Partikelform enthalten.

Durch die Anordnung der Ausströmfenster 18 weist der Strömungsweg 50 stromabwärts der Ausströmfenster 18 der lonentauscherkartusche 10 eine Umlenkung 52, insbesondere um mindestens 45 Grad, auf.

Der Bauraum kann bei der erfindungsgemäßen lonentauscherfiltervorrichtung 100 günstig ausgenutzt werden, da auch oberhalb der Ausströmöffnung 106 der lonentauscherfiltervorrichtung 100 lonentauscherharz angeordnet werden kann.

Das Kühlmedium strömt über die Einströmöffnung 104 des Einströmstutzens 108 des Gehäuses 102 in den unteren Innenraum des Gehäuses 102. Dort kann das Medium durch das im unteren Endbereich 20 des Kartuschenbehälters 14 angeordnete, in der Darstellung nicht erkennbare Einströmfenster 34 in den Kartuschenbehälter 14 eintreten und durch das lonentauschermaterial 12 strömen. Das Medium kann durch Ausströmfenster 18 bis an die Innenseite des Deckels 112 strömen, wo es umgelenkt und über einen Ringspalt 26 zwischen Kartuschenbehälter 14 und Deckel 112 der Ionentauscherfiltervorrichtung 100 entgegen der bisherigen Strömungsrichtung zurück zur Ausströmöffnung 106 geführt wird.

Die Umlenkung 52 der Strömung beim Eintritt in den Ringspalt 26 wirkt dabei homogenisierend auf die Strömung, so dass das gesamte lonentauscherharz gleichmäßig aufgebraucht wird und sich bzgl. der Strömung keine Toträume bilden.

Die bzgl. der Schwererichtung 54 weit oben liegende Anordnung der Ausströmöffnung 106 gewährleitet wiederum, dass die lonentauscherfilteranordnung 100 ausreichend gut entlüftet werden kann.

Die lonentauscherkartusche 10 weist am unteren den Ausströmfenstern 18 abgewandten axialen Endbereich 20 eine umlaufende Dichtung 22, insbesondere eine umlaufende im Wesentlichen in radialer Richtung dichtende Dichtung, auf, welche zur Abdichtung an der Innenseite der Mantelwandung 110 des Gehäuses 102 dient.

Der Deckel 112 des Gehäuses 102 ist einteilig mit der lonentauscherkartusche 10 ausgebildet, so dass der Aufnahmeraum 16 des Kartuschenbehälters 14 durch den Deckel 112 gegen die Umgebung abgedichtet ist. Der Deckel 112 weist einen Übergriffsbereich 24 auf, welcher in axialer Richtung L die Ausströmfenster 18 überlappt. Der Übergriffsbereich 24 ist als Verbindungsabschnitt 28 mit einem Gewindeabschnitt ausgebildet.

Die lonentauscherkartusche 10 kann bei bestimmungsgemäßer Montage der Ionentauscherfiltervorrichtung mit dem Deckel 112 in das Gehäuse 102 eingeschoben und über den Deckel 112 mit dem Gehäuse 102 verbunden werden. Dabei greift der Gewindeabschnitt des Verbindungsabschnitts 28 in das Gegengewinde 120 des Gehäuses 102 ein. Eine radial wirkende umlaufende Dichtung 118 axial oberhalb des Gewindes des Verbindungsbereichs 28 ist für die Abdichtung zwischen Deckel 112 und Gehäuse 102 vorgesehen.

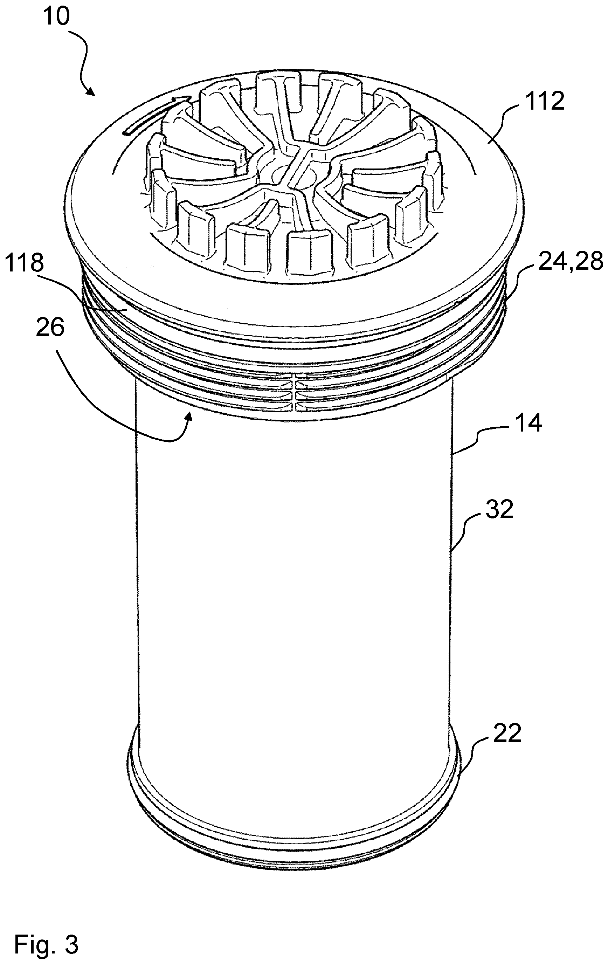

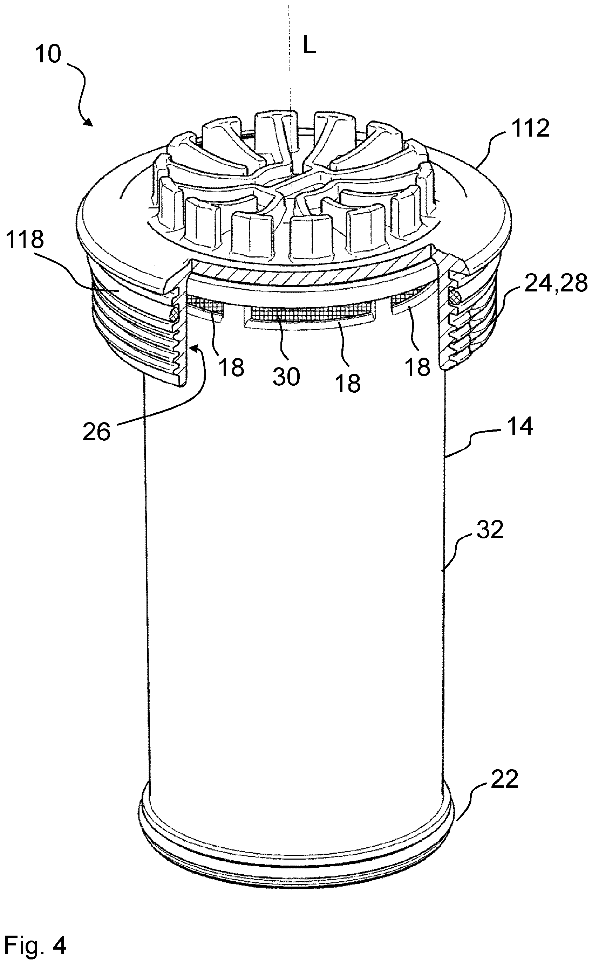

Figur 3 zeigt eine lonentauscherkartusche 10 für eine lonentauscherfiltervorrichtung 100 nach einem Ausführungsbeispiel der Erfindung. In Figur 4 ist die lonentauscherkartusche 10 nach Figur 3 mit teilweise angeschnittenem Übergriffsbereich.24 dargestellt, so dass die Ausströmfenster 18 zu erkennen sind.

Die lonentauscherkartusche 10 weist einen Kartuschenbehälter 14 auf mit einem, im Längsschnitt in Figur 2 ersichtlichen, Aufnahmeraum 16, der mit lonentauschermaterial 12 gefüllt und durch eine umlaufende Wandung 32 begrenzt ist. Die Wandung 32 weist über ihren Umfang verteilt mehrere Ausströmfenster 18 auf.

Die Wandung 32 ist einteilig mit einem Deckel 112 ausgebildet, der bestimmungsgemäß als Deckel 112 des Gehäuses 102 der in Figuren 1 und 2 dargestellten lonentauscherfiltervorrichtung 100 zur Aufnahme der lonentauscherkartusche 10 vorgesehen ist.

Wie insbesondere in Figur 4 zu erkennen ist, sind die Ausströmfenster 18 der Ionentauscherkartusche 10 in einem axial oberen Viertel des Aufnahmeraums 16 angeordnet. Weiter ist Siebgewebe 30 im Aufnahmeraum 14 vor den Ausströmfenstern 18 der lonentauscherkartusche 10 angeordnet, um der Strömung des Mediums zu ermöglichen, aus dem Kartuschenbehälter 14 auszutreten und zugleich die Schüttung des lonentauschermaterials 12 zurückzuhalten.

Der Deckel 112 weist einen Übergriffsbereich 24, insbesondere einen Verbindungsabschnitt 28 mit einem Gewindeabschnitt zur Verbindung mit dem Gehäuse 102 der lonentauscherfiltervorrichtung 100 auf, welcher in axialer Richtung L die Wandung 32 wenigstens überlappt.

Dadurch, dass der Übergriffsbereich 24 in einem Abstand zur Wandung 32 des Kartuschenbehälters 14 angeordnet ist, ist zwischen dem Übergriffsbereich 24 und der Wandung 32 ein Spalt 26, insbesondere ein Ringspalt, ausgebildet. Die Ausströmfenster 18 sind in dem vom Übergriffsbereich 24 überlappten Bereich der Wandung 32, also im Bereich des Spalts 26, angeordnet. Dadurch weist ein Strömungsweg 50 eines Mediums durch die lonentauscherkartusche 10 stromabwärts der Ausströmfenster 18 eine Umlenkung 52 innerhalb des Spalts 26 auf. Die Umlenkung 52 der Strömung beim Eintritt in den Ringspalt 26 wirkt dabei homogenisierend auf die Strömung, so dass das gesamte Ionentauscherharz gleichmäßig aufgebraucht wird und sich bzgl. der Strömung keine Toträume bilden.

## Patentansprüche

1. lonentauscherfiltervorrichtung (100), mit einem Gehäuse (102), in dem eine lonentauscherkartusche (10) aufgenommen ist,
wobei das Gehäuse (102) zumindest eine Einströmöffnung (104) und zumindest eine Ausströmöffnung (106) für ein Medium aufweist, wobei die zumindest eine Einströmöffnung (104) und die zumindest eine Ausströmöffnung (106) eine Wandung des Gehäuses (102) durchbrechen,
wobei ein Strömungsweg (50) von der Einströmöffnung (104) durch die Ionentauscherkartusche (10) zur Ausströmöffnung (106) verläuft,
wobei die lonentauscherkartusche (10) einen Kartuschenbehälter (14) mit einem Aufnahmeraum (16) aufweist, der mit lonentauschermaterial (12) gefüllt und durch eine umlaufende Wandung (32) begrenzt ist, die am oder über ihren Umfang verteilt ein oder mehrere Ausströmfenster (18) aufweist,
wobei das oder die Ausströmfenster (18) der lonentauscherkartusche (10) bezüglich der Ausströmöffnung (106) des Gehäuses (102) in axialer Richtung (L) versetzt angeordnet sind, wobei der Strömungsweg (50) stromabwärts der Ausströmfenster (18) der lonentauscherkartusche (10) wenigstens eine Umlenkung (52), insbesondere um mindestens 45 Grad aufweist, wobei die Ausströmfenster (18) der lonentauscherkartusche (10) bezüglich einer Schwererichtung (54) in einer bestimmungsgemäßen Montageposition axial oberhalb der Ausströmöffnung (106) des Gehäuses (102) angeordnet sind
**dadurch gekennzeichnet, dass**
die Ausströmöffnung (106) in einem oberen Drittel einer Gehäusehöhe (122) des Gehäuses (102) angeordnet ist;
ein Deckel (112) des Gehäuses (102) einen Übergriffsbereich (24) aufweist, welcher in axialer Richtung die Wandung wenigstens überlappt und einen Spalt, insbesondere einen Ringspalt, zwischen Übergriffsbereich und Wandung des Kartuschenbehälters ausbildet; wobei
ein Strömungsweg eines Mediums durch die lonentauscherkartusche stromabwärts der Ausströmfenster wenigstens eine Umlenkung innerhalb des Spalts auf weist;
**dadurch gekennzeichnet, dass** die lonentauscherkartusche (10) zumindest eine umlaufende Dichtung (22), insbesondere eine umlaufende, im Wesentlichen in radialer Richtung dichtende Dichtung, aufweist, welche insbesondere an einem den Ausströmfenstern (18) abgewandten axialen Endbereich (20) angeordnet ist.

2. lonentauscherfiltervorrichtung nach Anspruch 1, **dadurch gekennzeichnet, dass** die Ausströmöffnung (106) eine Mantelwandung (110) des Gehäuses (102) durchbricht.

3. lonentauscherfiltervorrichtung nach einem der Ansprüche 1 oder 2, **dadurch gekennzeichnet, dass** die Ausströmfenster (18) am oberen Ende des Aufnahmeraums des Kartuschenbehälters (14) angeordnet ist.

4. lonentauscherfiltervorrichtung nach einem der vorhergehenden Ansprüche, **dadurch gekennzeichnet, dass** die Ausströmfenster (18) der lonentauscherkartusche (10) in einem axial oberen Viertel des Aufnahmeraums (16) angeordnet sind.

5. lonentauscherfiltervorrichtung nach einem der vorhergehenden Ansprüche, **dadurch gekennzeichnet, dass** die Ausströmfenster (18) der lonentauscherkartusche (10) von einem Siebgewebe (30) bedeckt sind.

6. lonentauscherfiltervorrichtung nach einem der vorhergehenden Ansprüche, **dadurch gekennzeichnet, dass** das Gehäuse (102) einen Einströmstutzen (108) aufweist, welcher bevorzugt in einem unteren Drittel einer Gehäusehöhe (122) des Gehäuses (102) angeordnet ist.

7. lonentauscherfiltervorrichtung nach einem der vorhergehenden Ansprüche, **dadurch gekennzeichnet, dass** der Deckel (112) mit dem Kartuschenbehälter (14) verbunden ist.

8. lonentauscherfiltervorrichtung nach einem der vorhergehenden Ansprüche, **dadurch gekennzeichnet, dass** das lonentauschermaterial (12) als Schüttung vorliegt.

9. lonentauscherfiltervorrichtung nach einem der vorhergehenden Ansprüche, **dadurch gekennzeichnet, dass** ein Deckel (112) des Gehäuses (102) einteilig mit der lonentauscherkartusche (10) ausgebildet oder form- bzw. stoffschlüssig mit dem Kartuschenbehälter (14) verbunden ist, wobei bevorzugt die Dichtung (22) am Deckel (112) gehalten ist.

10. lonentauscherfiltervorrichtung nach Anspruch 9, **dadurch gekennzeichnet, dass** der Deckel (112) einen Übergriffsbereich (24) aufweist, der insbesondere als Verbindungsabschnitt (28) zur Verbindung der lonentauscherkartusche (10) mit dem Gehäuse (102) ausgebildet ist, insbesondere als Gewindeabschnitt, wobei der Übergriffsbereich (24) in axialer Richtung (L) die Ausströmfenster (18) unter Ausbildung eines Ringspalts überlappt.

11. lonentauscherkartusche (10) für eine lonentauscherfiltervorrichtung (100) nach einem der vorhergehenden Ansprüche.

12. lonentauscherkartusche (10) nach Anspruch 11 mit einem Kartuschenbehälter (14), der einen Aufnahmeraum (16) aufweist, der mit lonentauschermaterial (12) gefüllt und durch eine umlaufende Wandung (32) begrenzt ist, die am oder über ihren Umfang verteilt ein oder mehrere Ausströmfenster (18) aufweist,
**dadurch gekennzeichnet, dass** die Wandung (32) einteilig mit einem Deckel (112) ausgebildet oder form- bzw. stoffschlüssig mit dem Deckel (112) verbunden ist, der bestimmungsgemäß als Deckel (112) eines Gehäuses (102) der Ionentauscherfiltervorrichtung (100) zur Aufnahme der lonentauscherkartusche (10) vorgesehen ist, und wobei der Deckel (112) einen Übergriffsbereich (24) aufweist, der in axialer Richtung (L) die Ausströmfenster (18) unter Ausbildung eines Ringspalts (26) überlappt und wobei ein Strömungsweg (50) eines Mediums durch die lonentauscherkartusche (10) stromabwärts der Ausströmfenster (18) eine Umlenkung (52) innerhalb des Ringspalts (26) aufweist.

13. lonentauscherkartusche nach Anspruch 11 oder 12, **dadurch gekennzeichnet, dass** der Übergriffsbereich (24) als Verbindungsabschnitt (28) zur Verbindung der lonentauscherkartusche (10) mit dem Gehäuse (102) ausgebildet ist, insbesondere als Gewindeabschnitt.

14. lonentauscherkartusche nach Anspruch 13, **dadurch gekennzeichnet, dass** in dem Gewindeabschnitt des Übergriffsbereichs (24) ein Außengewinde vorliegt.

15. Brennstoffzellensystem mit einer lonentauscherfiltervorrichtung (100) nach einem der Ansprüche 1 bis 10.

16. lonentauscherfiltervorrichtung (100), insbesondere für ein Brennstoffzellensystem, mit einem Gehäuse (102), in dem eine lonentauscherkartusche (10) aufgenommen ist,
wobei das Gehäuse (102) zumindest eine Einströmöffnung (104) und zumindest eine Ausströmöffnung (106) für ein Medium aufweist, wobei die zumindest eine Einströmöffnung (104) und die zumindest eine Ausströmöffnung (106) eine Wandung des Gehäuses (102) durchbrechen,
wobei ein Strömungsweg (50) von der Einströmöffnung (104) durch die Ionentauscherkartusche (10) zur Ausströmöffnung (106) verläuft,
wobei die lonentauscherkartusche (10) einen Kartuschenbehälter (14) mit einem Aufnahmeraum (16) aufweist, der mit lonentauschermaterial (12) gefüllt und durch eine umlaufende Wandung (32) begrenzt ist, die am oder über ihren Umfang verteilt ein oder mehrere Ausströmfenster (18) aufweist,
**dadurch gekennzeichnet, dass** das oder die Ausströmfenster (18) der Ionentauscherkartusche (10) bezüglich der Ausströmöffnung (106) des Gehäuses (102) in axialer Richtung (L) versetzt angeordnet sind, wobei der Strömungsweg (50) stromabwärts der Ausströmfenster (18) der lonentauscherkartusche (10) wenigstens eine Umlenkung (52), insbesondere um mindestens 45 Grad aufweist, wobei die Ausströmfenster (18) der lonentauscherkartusche (10) bezüglich einer Schwererichtung (54) in einer bestimmungsgemäßen Montageposition axial oberhalb der Ausströmöffnung (106) des Gehäuses (102) angeordnet sind.

17. lonentauscherfiltervorrichtung nach Anspruch 16, **dadurch gekennzeichnet, dass** die Ausströmöffnung (106) eine Mantelwandung (110) des Gehäuses (102) durchbricht.

18. lonentauscherfiltervorrichtung nach einem der Ansprüche 16 oder 17, **dadurch gekennzeichnet, dass** die Ausströmöffnung (106) in einem oberen Drittel einer Gehäusehöhe (122) des Gehäuses (102) angeordnet ist.

19. lonentauscherfiltervorrichtung nach einem der vorhergehenden Ansprüche 16 bis 18, **dadurch gekennzeichnet, dass** die Ausströmfenster (18) der lonentauscherkartusche (10) in einem axial oberen Viertel des Aufnahmeraums (16) angeordnet sind.

20. lonentauscherfiltervorrichtung nach einem der vorhergehenden Ansprüche 16 bis 19, **dadurch gekennzeichnet, dass** die Ausströmfenster (18) der lonentauscherkartusche (10) von einem Siebgewebe (30) bedeckt sind.

21. lonentauscherfiltervorrichtung nach einem der vorhergehenden Ansprüche 16 bis 20, **dadurch gekennzeichnet, dass** das Gehäuse (102) einen Einströmstutzen (108) aufweist, welcher bevorzugt in einem unteren Drittel einer Gehäusehöhe (122) des Gehäuses (102) angeordnet ist.

22. lonentauscherfiltervorrichtung nach einem der vorhergehenden Ansprüche 16 bis 21, **dadurch gekennzeichnet, dass** die lonentauscherkartusche (10) zumindest eine umlaufende Dichtung (22), insbesondere eine umlaufende, im Wesentlichen in radialer Richtung dichtende Dichtung, aufweist, welche insbesondere an einem den Ausströmfenstern (18) abgewandten axialen Endbereich (20) angeordnet ist.

23. lonentauscherfiltervorrichtung nach einem der vorhergehenden Ansprüche 16 bis 22, **dadurch gekennzeichnet, dass** das lonentauschermaterial (12) als Schüttung vorliegt.

24. lonentauscherfiltervorrichtung nach einem der vorhergehenden Ansprüche 16 bis 23, **dadurch gekennzeichnet, dass** ein Deckel (112) des Gehäuses (102) einteilig mit der lonentauscherkartusche (10) ausgebildet oder form- bzw. stoffschlüssig mit dem Kartuschenbehälter (14) verbunden ist, wobei bevorzugt die Dichtung (22) am Deckel (112) gehalten ist.

25. lonentauscherfiltervorrichtung nach Anspruch 24, **dadurch gekennzeichnet, dass** der Deckel (112) einen Übergriffsbereich (24) aufweist, der insbesondere als Verbindungsabschnitt (28) zur Verbindung der lonentauscherkartusche (10) mit dem Gehäuse (102) ausgebildet ist, insbesondere als Gewindeabschnitt, wobei der Übergriffsbereich (24) in axialer Richtung (L) die Ausströmfenster (18) unter Ausbildung eines Ringspalts überlappt.

26. lonentauscherkartusche (10) für eine lonentauscherfiltervorrichtung (100) nach einem der vorhergehenden Ansprüche 16 bis 25, mit einem Kartuschenbehälter (14), der einen Aufnahmeraum (16) aufweist, der mit lonentauschermaterial (12) gefüllt und durch eine umlaufende Wandung (32) begrenzt ist, die am oder über ihren Umfang verteilt ein oder mehrere Ausströmfenster (18) aufweist,
**dadurch gekennzeichnet, dass** die Wandung (32) einteilig mit einem Deckel (112) ausgebildet oder form- bzw. stoffschlüssig mit dem Deckel (112) verbunden ist, der bestimmungsgemäß als Deckel (112) eines Gehäuses (102) der Ionentauscherfiltervorrichtung (100) zur Aufnahme der lonentauscherkartusche (10) vorgesehen ist, und wobei der Deckel (112) einen Übergriffsbereich (24) aufweist, der in axialer Richtung (L) die Ausströmfenster (18) unter Ausbildung eines Ringspalts (26) überlappt und wobei ein Strömungsweg (50) eines Mediums durch die lonentauscherkartusche (10) stromabwärts der Ausströmfenster (18) eine Umlenkung (52) innerhalb des Ringspalts (26) aufweist.

27. lonentauscherkartusche nach Anspruch 26, **dadurch gekennzeichnet, dass** der Übergriffsbereich (24) als Verbindungsabschnitt (28) zur Verbindung der lonentauscherkartusche (10) mit dem Gehäuse (102) ausgebildet ist, insbesondere als Gewindeabschnitt.

28. lonentauscherkartusche nach Anspruch 27, **dadurch gekennzeichnet, dass** in dem Gewindeabschnitt des Übergriffsbereichs (24) ein Außengewinde vorliegt.

29. Brennstoffzellensystem mit einer lonentauscherfiltervorrichtung (100) nach einem der Ansprüche 16 bis 25.
